# FASCICULE DE BREVET EUROPEEN

(11) **EP 2 300 250 B1**
(45) Date de publication et mention de la délivrance du brevet: **09.11.2011**
(21) Numéro de dépôt: 09761928.2
(22) Date de dépôt: 10.06.2009
(51) Int. Cl.: B60J 5/10

(54) **OUVRANT, NOTAMMENT HAYON, DE VEHICULE**
ÖFFNUNG, INSBESONDERE HECKKLAPPE FÜR EIN KRAFTFAHRZEUG
OPENING, IN PARTICULAR TAILGATE FOR AN AUTOMOBILE

(30) Priorité: 12.06.2008 FR 0853906
(43) Date de publication de la demande: 30.03.2011
(73) Titulaire: Compagnie Plastic Omnium, 69007 Lyon (FR)
(72) Inventeur: HACHE, Bertrand, F-07430 Saint CYR (FR)
(74) Mandataire: Potdevin, Emmanuel Eric
(86) Numéro de dépôt international: PCT/FR2009/051094
(87) Numéro de publication internationale: WO 2009/150377

(56) Documents cités:
- EP-A- 1 234 702
- DE-A1- 4 419 128
- JP-A- 2003 120 121

## Description

La présente invention concerne les ouvrants de véhicule, notamment les hayons. On connaît, en particulier pour les véhicules citadins dont la caisse présente une ouverture de petite taille à l'arrière, un hayon ne comportant pas de caisson. On rappelle qu'un caisson de hayon est un élément structurel du hayon, assurant les interfaces avec la caisse, telles que l'étanchéité ou la fixation, et sur lequel est ménagée une vitre formant lunette arrière et éventuellement une pièce de carrosserie.

Le hayon précité comporte en revanche uniquement une vitre formant la lunette du véhicule, sur laquelle sont rapportées au moins une pièce de carrosserie et sa doublure. Le hayon est fixé à la caisse en blanc par des moyens tels que des charnières, les parties mobiles des charnières étant également rapportés sur la vitre. Le hayon est également relié à la caisse par l'intermédiaire d'équilibreurs pour assister l'ouverture du hayon, fixés sur la vitre. En outre, la vitre de ce véhicule procure une piste d'étanchéité permettant d'assurer l'étanchéité de l'habitacle lorsque l'ouvrant est fermé.

Un tel hayon ne comportant pas de doublure formant un caisson, son poids est diminué.

Toutefois, la fixation de la vitre à la caisse par l'intermédiaire des charnières permettant l'articulation du hayon sur la caisse engendre de fortes contraintes dans la vitre. Dès lors, pour que celle-ci possède des propriétés mécaniques lui permettant de résister à ces contraintes, on lui donne une épaisseur assez importante, son poids étant de ce fait relativement élevé.

Le problème posé est résolu par les caractéristiques de la revendication 1.

L'invention permet de diminuer le poids d'un tel ouvrant.

A cet effet, l'invention a pour objet un ouvrant de véhicule automobile, comprenant une vitre et un élément de support disposé dans le prolongement de la vitre, l'élément de support comportant :
- des moyens de fixation de l'ouvrant à une caisse en blanc du véhicule, et
- des moyens de fixation de la vitre à l'élément de support.

De cette façon, on découple la vitre et la fixation de l'ouvrant à la caisse. La fixation de la vitre n'est donc plus imposée par des besoins liés à la mobilité du hayon. On peut donc choisir de fixer la vitre sur la pièce de la façon la plus adaptée et engendrant le moins de contraintes dans la vitre. L'épaisseur de celle-ci et, de ce fait, son poids, peuvent donc être diminués en conséquence.

En outre, malgré la présence d'une pièce supplémentaire, un tel ouvrant permet d'économiser des coûts de fabrication. En effet, outre les gains de matière effectués du fait de la diminution d'épaisseur de la vitre, on économise des coûts liés aux charnières permettant de relier l'ouvrant à la caisse. En effet, dans l'état de la technique, du fait du procédé de mise en forme complexe du verre constituant la vitre, on peut difficilement galber celle-ci pour qu'elle se rapproche au plus près du pavillon du véhicule. De ce fait, les charnières, dont l'axe de rotation doit être situé au plus près du pavillon , comprennent une partie mobile fixée à la vitre comportant un bras de levier assez long. Ce type de charnières est très coûteux. En outre, un hayon muni de telles charnières est difficile à positionner.

Comme le cahier des charges du hayon ne justifie pas que l'élément de support de l'ouvrant soit forcément réalisé en verre, sa mise en forme peut être plus aisée et sa forme peut être adaptée pour s'approcher au plus près du pavillon du véhicule. Les charnières peuvent être alors de type plus simple, pour être moins coûteuses. De plus, le positionnement du hayon sur le véhicule est plus simple et donc moins coûteux en temps.

L'invention peut également comprendre l'une ou l'autre des caractéristiques de la liste suivante :
- les moyens de fixation de la vitre comprennent au moins trois points de fixation, de préférence au moins cinq points de fixation. Ainsi, en augmentant le nombre de points de fixation par rapport à l'état de la technique précité, on répartit les contraintes subies par le hayon. La raideur de la vitre peut donc être préservée, alors que son épaisseur diminue,
- les points de fixation de l'élément de support et de la vitre sont répartis sur la largeur de l'ouvrant. La largeur de l'ouvrant est la dimension de celui-ci s'étendant selon la direction transversale du véhicule, lorsque l'ouvrant est monté sur le véhicule. Les points de fixation sont donc également placés dans la partie galbée de la vitre, située au niveau des bords d'extrémité de l'ouvrant selon cette direction. Or, les inventeurs à la base de l'invention se sont aperçus que fixer la vitre à ces endroits permet d'améliorer la fixation et de diminuer les contraintes subies par la vitre. L'épaisseur de la vitre peut de ce fait encore être diminuée,
- la vitre et l'élément de support sont reliés par vissage, rivetage, encliquetage ou collage. Dans le cas où ils sont reliés par collage, ils sont liés à l'aide d'une infinité de points de fixation s'étendant sur toute la largeur de l'ouvrant,
- les moyens de fixation de l'ouvrant à la caisse comprennent au moins une partie mobile d'une charnière, dont l'autre partie est fixée sur la caisse en blanc,
- l'élément de support est recouvert d'une pièce de carrosserie et comprend des moyens de fixation de cette pièce. Cette dernière forme la partie supérieure du hayon, visible de l'extérieur. Cette pièce de carrosserie, par exemple un spoiler, est monopeau contrairement à celle de l'état de la technique précité. On entend par « monopeau » qu'elle est réalisée en une seule pièce fournissant des interfaces de fixation et une face d'aspect visible de l'extérieur du véhicule. En effet, cette pièce de carrosserie est placée dans une zone du hayon assez sollicitée, par exemple par des efforts aérodynamiques ou lors du lavage au rouleau du véhicule. Dans l'état de la technique, la pièce de carrosserie est constituée d'une peau ayant une fonction esthétique et d'une doublure ayant une fonction structurelle permettant de supporter les sollicitations externes. Or, comme, dans l'invention, l'élément de support forme un élément structurel du véhicule, on peut se passer de la doublure de la pièce de carrosserie, ce qui permet encore un gain en poids du hayon,
- les moyens de fixation de la pièce de carrosserie sont répartis à la périphérie de l'élément de support. En effet, du fait de la présence de l'élément de support, et contrairement à l'état de la technique précité dans lequel la fixation est effectuée sur la vitre, on peut fixer la pièce de carrosserie aux endroits les plus adaptés de l'élément de support. Fixer celle-ci en périphérie de l'élément de support permet notamment d'améliorer son positionnement,
- l'élément de support comprend au moins l'un des organes de la liste suivante :
   ○ au moins une rotule d'équilibreur pour l'ouverture assistée de l'ouvrant,
   ○ un feu,
   ○ un éclairage pour l'habitacle du véhicule,
   ○ au moins un câble électrique,
   ○ une antenne,
   ○ un élément pour la connexion d'un système de dégivrage,
   ○ un joint acoustique,
   ○ un système de motorisation pour l'ouverture assistée de l'ouvrant,
   ○ au moins un élément de référencement pour le montage de l'ouvrant sur la caisse en blanc.

   De ce fait, la plupart des éléments du hayon sont intégrés à l'élément de support avant le montage du hayon sur le véhicule et hors de la chaîne principale, ce qui permet encore d'économiser des coûts de fabrication. L'élément de support forme donc un module rassemblant la plupart des éléments fonctionnels du hayon. Concernant en particulier l'équilibreur, comme sa rotule est intégrée à l'élément de support, il n'est alors plus fixé sur la vitre, qui est libérée, par rapport à celle de l'état de la technique précité, des contraintes engendrées par l'équilibreur et peut alors être de raideur et d'épaisseur encore moindre,
- la vitre comporte une interface d'étanchéité, et apte à coopérer avec une interface complémentaire de la caisse lorsque l'ouvrant est en position fermée. Cette vitre présente en particulier une surface qui repose sur un joint porté par la caisse lorsque l'ouvrant est en position fermée. C'est donc la vitre, qui, du fait de l'absence de caisson, assure l'étanchéité du hayon. On notera que l'élément de support est logé dans la zone humide, ou gouttière, du véhicule, située entre la zone étanche et les pièces de carrosserie du véhicule,
- l'élément de support est réalisé au moins partiellement en matière plastique, notamment renforcée de fibres, tel qu'un composé de moulage, par exemple le SMC (Sheet Moulding Compound), l'AMC (Advanced Moulding Compound) ou le BMC (Bulk Moulding Compound), ou tel qu'un matériau thermoplastique renforcé, par exemple un polypropylène renforcé de fibres de verre longues (PPLGF). Ainsi, l'élément de support est simple à fabriquer. De plus, la matière plastique ayant une masse volumique peu importante, l'élément de support est léger et le poids supplémentaire dû à sa présence est très loin de compenser le gain en poids effectué dans la vitre grâce à sa présence. En outre, la matière plastique étant assez facile à mettre en forme, on peut intégrer des éléments du module, tels que les éléments de référencement, dès le moulage de la partie plastique de l'élément de support. En outre, l'utilisation de la matière plastique pour former l'élément de support ne perturbe pas le fonctionnement des éléments électriques intégrés au module, tels que l'antenne,
- l'ouvrant forme un hayon de véhicule. Il peut également former un capot ou un ouvrant de toit de véhicule.

L'invention a également pour objet un véhicule automobile comprenant un ouvrant selon l'invention.

La pièce d'ouvrant de véhicule, supporte des moyens de fixation de l'ouvrant à une caisse en blanc du véhicule et comprend notamment une partie mobile d'au moins une charnière. Une telle pièce comprend également, au niveau d'un bord d'extrémité inférieur de la pièce, des moyens de fixation pour rapporter une vitre sur la pièce, la pièce étant dépourvue d'autres moyens de fixation pour rapporter la vitre sur la pièce.

L'invention a également pour objet un procédé de fabrication d'un ouvrant de véhicule, comprenant les étapes suivantes dans un ordre quelconque :
- on fixe au niveau d'un bord d'extrémité inférieur d'une pièce de l'ouvrant un bord d'extrémité supérieur d'une vitre de l'ouvrant,
- on monte, sur la pièce, des moyens de fixation pour rapporter l'ouvrant sur une caisse en blanc de véhicule, comprenant notamment une partie mobile d'au moins une charnière.

De façon optionnelle, on fixe sur la pièce d'autres éléments, tels que des éléments fonctionnels du hayon (par exemple, une rotule d'équilibreur pour l'ouverture assistée de l'ouvrant, un feu, un éclairage pour l'habitacle du véhicule, au moins un câble électrique, une antenne, un élément pour la connexion d'un système de dégivrage, un joint acoustique, un système de motorisation pour l'ouverture assistée de l'ouvrant, au moins un élément de référencement pour le montage de l'ouvrant sur la caisse en blanc) ou une pièce de carrosserie du véhicule.

De préférence, on fixe d'abord la vitre sur la pièce, puis éventuellement les éléments fonctionnels du hayon, puis éventuellement la pièce de carrosserie puis on monte les moyens de fixation de l'ouvrant à la caisse sur la pièce.

L'invention sera mieux comprise à la lecture de la description qui va suivre, donnée uniquement à titre d'exemple et faite en se référant aux dessins dans lesquels :
- la figure 1 est une vue en éclaté d'un ouvrant selon un mode de réalisation de l'invention,
- la figure 2 est une vue de l'ouvrant de la figure 1, lorsqu'il est partiellement assemblé.

On a représenté sur les figures un ouvrant 10, constituant un hayon de véhicule. Cet ouvrant comporte en partie inférieure une vitre 12, et en partie supérieure un élément de support 14, l'élément de support 14 étant recouvert d'une pièce de carrosserie 16 également appelée spoiler.

La vitre 12 et le spoiler 16 sont visibles depuis l'extérieur du véhicule lorsque le hayon est assemblé et monté sur le véhicule.

La vitre 12 est réalisée en verre ou en matière plastique tel que du polycarbonate (PC). Elle forme la lunette arrière dans sa partie centrale 18 transparente et laisse passer de la lumière dans l'habitacle. A sa périphérie 20, la vitre est peinte ou recouverte, sur sa face extérieure lorsqu'elle est montée sur le véhicule, de pièces de carrosserie supplémentaires, de façon à être de la même couleur que le reste de la carrosserie.

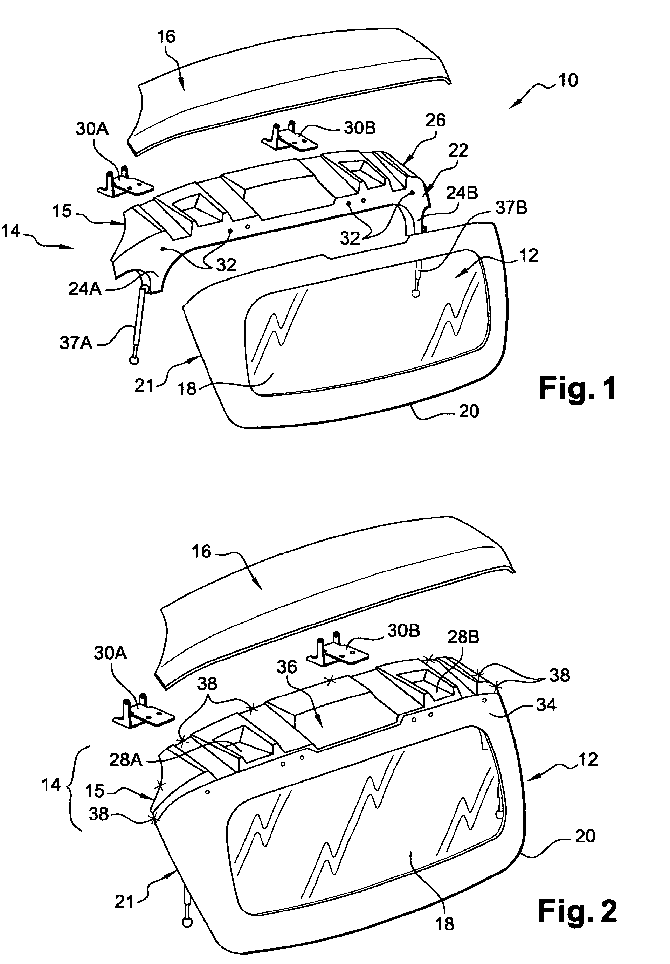

La vitre est d'épaisseur réduite et de forme générale plane, de façon à s'étendre, lorsque le hayon est en position fermée sur la caisse, essentiellement perpendiculairement relativement à la direction longitudinale du véhicule. Comme on le voit sur la figure 2, les bords d'extrémité 21 de la vitre selon la direction transversale du véhicule sont recourbés ou galbés vers l'avant lorsque le hayon est monté sur le véhicule.

Le hayon étant dépourvu de caisson, la vitre 12 comprend également au niveau de son extrémité inférieure une serrure (non représentée) pour le verrouillage du hayon en position fermée. Elle comprend également une piste d'étanchéité (non représentée) sur sa face interne, et coopérant avec une piste complémentaire de la caisse en blanc comprenant un joint pour assurer l'étanchéité entre le hayon et la caisse lorsque l'ouvrant est en position fermée.

L'élément de support 14 comprend une pièce 15 réalisée en matière plastique renforcée de fibres, de façon à former une partie structurelle du hayon. Cette pièce 15 est plus particulièrement réalisée en un composé de moulage tel que le SMC (Sheet Moulding Compound), le BMC (Bulk Moulding Compound) ou l'AMC (Advanced Moulding Compound) ou en un matériau thermoplastique renforcé, tel que du polypropylène renforcé de fibres de verre longues (PPLGF).

La pièce 15 forme une partie structurelle du hayon, de raideur importante et permettant de supporter de nombreuses contraintes sans se déformer. Du fait de la présence de cette pièce 15, le spoiler 16 peut être dépourvu de fonction structurelle, même si la zone du hayon dans laquelle il est placé est relativement sollicitée, par exemple par des sollicitations aérodynamiques ou lors du lavage au rouleau du véhicule. C'est en effet la pièce 15 qui supporte ces sollicitations.

Le spoiler 16 est monopeau, c'est à dire qu'il est réalisé en une seule pièce fournissant des interfaces de fixations et une face d'aspect visible de l'extérieur du véhicule, et est réalisé en matériau thermoplastique tel que du polypropylène (PP). Il est peint de la même couleur que le reste de la carrosserie et a essentiellement une fonction esthétique.

La pièce 15 comprend deux parties d'épaisseur réduite et essentiellement perpendiculaires l'une par rapport à l'autre. La première partie 22, située en partie inférieure de la pièce 15 est disposée dans le prolongement de la vitre lorsque le hayon est assemblé et suit la forme de celle-ci. Elle est donc par exemple galbée au niveau de ses bords d'extrémité selon la direction transversale du véhicule lorsque le hayon est monté sur le véhicule. Elle comprend en outre à chacune de ses extrémités selon la direction transversale du véhicule un montant vertical, respectivement 24A, 24B s'étendant vers le bas.

La deuxième partie 26 est située en partie supérieure de la pièce 15 et est disposée dans le prolongement du pavillon du véhicule lorsque le hayon est monté sur le véhicule.

L'élément de support 14 comprend des moyens de fixation à la caisse en blanc du véhicule automobile, comme on le voit mieux sur la figure 2. Ces moyens sont montés sur la pièce 15 dans la deuxième partie 26 de celle-ci, plus particulièrement dans les zones 28A, 28B. Ces moyens sont constitués par les parties mobiles 30A, 30B de deux charnières. Les parties mobiles 30A, 30B, sont rapportées sur la pièce 15 par vissage. La pièce comprend en effet des orifices coopérant avec des orifices complémentaires des parties mobiles, dans lesquels des éléments de fixation tel que des vis s'engagent.

Ces parties mobiles 30A, 30B, coopèrent avec des parties fixes des charnières, situées sur la caisse en blanc et non représentées sur les dessins. Les parties fixes et mobiles de chacune des deux charnières sont reliées par un axe de rotation horizontal et perpendiculaire à la direction longitudinale du véhicule, les axes des deux charnières étant coaxiaux et étant situés au plus près du pavillon du véhicule.

L'élément de support 14, notamment la pièce 15, comprend également des moyens de fixation par vissage de la pièce 15 à la vitre 12, dans la partie inférieure 22 de la pièce 15. Ces moyens de fixation comprennent des orifices 32 coopérant avec des orifices complémentaires 34 ménagés dans un bord d'extrémité supérieur de la vitre 12, comme on le voit notamment sur la figure 2. Lorsque la vitre 12 est montée sur l'élément de support, les orifices 32 et 34 sont superposés et des vis de fixation sont introduites dans ces orifices superposés pour assurer la solidarisation de la vitre 12 et de la pièce 15. Les orifices 32 et 34 sont au nombre de 8 et sont répartis sur toute la largeur de l'ouvrant 10, même dans la partie galbée située aux bords d'extrémité de la vitre 12 et de la pièce 15 selon la direction transversale du véhicule.

Ce type de fixation permet de répartir les contraintes sur plus de points de fixation que lorsque la vitre est directement fixée aux charnières. En outre, du fait que des orifices de fixation sont ménagés dans la partie galbée, à l'endroit où la vitre possède plus d'inertie, la vitre subit des contraintes moindres. Son épaisseur peut donc être largement diminuée.

Ainsi, la pièce 15 est d'un seul tenant et supporte à elle seule la vitre pour la relier à la caisse en blanc du véhicule.

La pièce 15 comprend en outre un emplacement 36 pour intégrer un feu arrière, par exemple un feu stop. Cet emplacement est situé dans la partie supérieure 26.

Comme cela est montré sur la figure 1, l'élément de support 14 intègre également une rotule pour fixer des équilibreurs 37A, 37B. De cette façon, les équilibreurs 37A, 37B sont supportés par la pièce 15 à l'extrémité des montants 24A, 24B. Ces rotules sont solidarisées aux équilibreurs à l'une de leurs extrémités longitudinales. Les équilibreurs sont rapportés sur la caisse à l'autre de leurs extrémités longitudinales. Ils permettent d'assister l'ouverture du hayon.

Il est particulièrement avantageux que ces équilibreurs ne soient pas fixés sur la vitre 12 car il engendrent de grosses contraintes lors de l'ouverture du hayon. La raideur de la vitre, et, par conséquent, son épaisseur, devraient donc être très importantes si ces équilibreurs étaient fixés sur la vitre. Or, comme la vitre est libérée des contraintes engendrées par les équilibreurs, ceux-ci étant fixés à la pièce 15, son épaisseur peut être diminuée.

Le spoiler 16 est également fixé sur la pièce 15, à la périphérie de celle-ci, en des points de fixation 38 représentés par des croix sur la figure 2. Le spoiler 16 est fixé aussi bien sur les parties 22 et 26 de la pièce 15, par de nombreux points de fixation, plus particulièrement 8 dans l'exemple, de sorte qu'il est positionné au plus près de la pièce 15 et de la vitre 12.

Ainsi, l'ouvrant selon l'invention est très avantageux, puisqu'il permet de diminuer considérablement le poids de la vitre du hayon. La raideur de la vitre peut être diminuée, celle-ci n'étant pas autant sollicitée que dans l'état de la technique.

En outre, comme l'élément de support forme un module pouvant comprendre de nombreux éléments, le temps de montage du hayon sur la chaîne de montage principale est diminué, ce qui permet d'économiser des coûts de fabrication.

On notera que l'invention n'est pas limitée au mode de réalisation décrit.

L'élément de support peut en effet également intégrer d'autres organes non représentés sur les figures tels qu'un éclairage pour l'habitacle du véhicule, au moins un câble électrique, une antenne, un élément pour la connexion d'un système de dégivrage, un joint acoustique, un système de motorisation pour l'ouverture assistée de l'ouvrant, au moins un élément de référencement pour le montage de l'ouvrant sur la caisse en blanc, etc.

Les moyens de fixation de la vitre et de la pièce ne sont pas obligatoirement des moyens de fixation par vissage : ils peuvent par exemple être liés par rivetage, encliquetage ou tout autre moyen de fixation mécanique, ou par collage, auquel cas la pièce comprendrait une piste de collage et la vitre et l'élément de support seraient liés par l'intermédiaire d'une infinité de points de fixation.

L'ouvrant ne forme pas non plus forcément un hayon de véhicule, et peut par exemple concerner un ouvrant de toit ou un capot.

En outre, les formes et matériaux utilisés pour les différents éléments de l'ouvrant ne sont pas limités à ceux décrits.

## Revendications

1. Ouvrant (10) de véhicule, formant un hayon, **caractérisé en ce qu'**il comprend une vitre (12) et un élément de support (14) disposé dans le prolongement de la vitre, l'élément de support (14) comportant :
- des moyens de fixation (30A, 30B) de l'ouvrant à une caisse en blanc du véhicule, et
- des moyens de fixation (32) de la vitre (12) à l'élément de support (14), les moyens de fixation (32) de la vitre étant situés au niveau d'un bord d'extrémité inférieur de l'élément de support (14) et coopérant avec un bord d'extrémité supérieur de la vitre (12) ; ledit élément de support (14) comportant une pièce (15) supportant les moyens de fixation (30A, 30B) de l'ouvrant à la caisse en blanc du véhicule, ladite pièce (15) comprenant au niveau d'un bord d'extrémité inférieur les moyens de fixation (32) de la vitre (12), ladite pièce (15) étant dépourvue d'autres moyens de fixation pour rapporter la vitre.

2. Ouvrant (10) selon la revendication 1, dans lequel les moyens de fixation de la vitre comprennent au moins trois points de fixation (32), de préférence au moins cinq points de fixation, et sont notamment répartis sur la largeur de l'ouvrant.

3. Ouvrant (10) selon la revendication 1 ou 2, dans lequel la vitre (12) et l'élément de support (14) sont reliés par vissage, rivetage, encliquetage ou collage.

4. Ouvrant (10) selon l'une quelconque des revendications précédentes, dans lequel les moyens de fixation de l'ouvrant à la caisse comprennent au moins une partie mobile (30A, 30B) d'une charnière.

5. Ouvrant (10) selon l'une quelconque des revendications précédentes, dans lequel l'élément de support (14) est recouvert d'une pièce de carrosserie (16) et comprend des moyens de fixation (38) de cette pièce (16), de préférence répartis à la périphérie de l'élément de support (14).

6. Ouvrant (10) selon l'une quelconque des revendications précédentes, dans lequel l'élément de support comprend au moins l'un des organes de la liste suivante :
- au moins une rotule d'équilibreur (37A, 37B) pour l'ouverture assistée de l'ouvrant,
- un feu,
- un éclairage pour l'habitacle du véhicule,
- au moins un câble électrique,
- une antenne,
- un élément pour la connexion d'un système de dégivrage,
- un joint acoustique,
- un système de motorisation pour l'ouverture assistée de l'ouvrant,
- au moins un élément de référencement pour le montage de l'ouvrant sur la caisse en blanc.

7. Ouvrant (10) selon l'une quelconque des revendications précédentes, dans lequel l'élément de support (14) est réalisé au moins partiellement en matière plastique, notamment renforcée de fibres, tel qu'un composé de moulage, par exemple le SMC (Sheet Moulding Compound), l'AMC (Advanced Moulding Compound) ou le BMC (Bulk Moulding Compound), ou tel qu'un matériau thermoplastique renforcé, par exemple le polypropylène renforcé de fibres de verre longues (PPLGF).

8. Véhicule comprenant un ouvrant (10) selon l'une quelconque des revendications précédentes.

9. Procédé de fabrication d'un ouvrant (10) de véhicule selon la revendication 1, **caractérisé en ce qu'**il comprend les étapes suivantes dans un ordre quelconque :
- on fixe au niveau d'un bord d'extrémité inférieur d'une pièce (15) de l'ouvrant un bord d'extrémité supérieur d'une vitre (12) de l'ouvrant,
- on monte, sur la pièce (15), des moyens de fixation pour rapporter l'ouvrant sur une caisse de véhicule, comprenant notamment une partie mobile (30A, 30B) d'au moins une charnière, et éventuellement d'autres éléments, tels qu'une pièce de carrosserie (16).

## Claims

1. Vehicle door (10), forming a tailgate, the door being **characterized in that** it comprises a window glass (12) and a support element (14) extending the window glass, the support element (14) comprising:
- fastener means (30A, 30B) for fastening the door to a body-in-white of the vehicle; and
- fastener means (32) for fastening the window glass (12) to the support element (14), the window glass fastener means (32) being situated at a bottom end edge of the support element (14) and co-operating with a top end edge of the window glass (12); said support element (14) comprising a part (15) that supports the fastener means (30A, 30B) for fastening the door to the body-in-white of the vehicle, said part (15) including, at a bottom end edge, the fastener means (32) for fastening the window glass (12), said part (15) having no other fastener means for fastening the window glass.

2. Door (10) according to claim 1, wherein the window glass fastener means comprise at least three fastening points (32), preferably at least five fastening points, which points are distributed in particular across the width of the door.

3. Door (10) according to claim 1 or claim 2, wherein the window glass (12) and the support element (14) are connected together by screw fastening, riveting, snap-fastening, or adhesive.

4. Door (10) according to any preceding claim, wherein the fastener means for fastening the door to the body comprise at least one movable hinge portion (30A, 30B).

5. Door (10) according to any preceding claim, wherein the support element (14) is covered by a bodywork part (16) and includes fastener means (38) for fastening said part (16), the fastener means preferably being distributed at the periphery of the support element (14).

6. Door (10) according to any preceding claim, wherein the support element includes at least one of the members in the following list:
· at least one ball joint (37A, 37B) for a prop for assisting in opening the door;
· a light;
· lighting for the cabin of the vehicle;
· at least one electric cable;
· an antenna;
· an element for connection to a defrosting system;
· a soundproofing seal;
· a motor system for assisted opening of the door; and
· at least one referencing element for use in mounting the door on the body-in-white.

7. Door (10) according to any preceding claim, wherein the support element (14) is made at least in part out of plastics material, in particular a fiber-reinforced plastics material, such as a molding compound, e.g. sheet molding compound (SMC), advanced-molding compound (AMC), or bulk-molding compound (BMC), or such as a reinforced thermoplastic material, e.g. polypropylene reinforced with long glass fibers (PPLGF).

8. Vehicle including a door (10) according to any preceding claim.

9. Method of fabricating a vehicle door (10) according to claim 1, the method being **characterized in that** it comprises the following steps in any order:
· fastening a top end edge of a window glass (12) of the door to a bottom end edge of a part (15) of the door; and
· mounting fastener means on the part (15) for fastening the door to a vehicle body, the fastener means comprising in particular a movable portion (30A, 30B) of at least one hinge, and optionally other elements, such as a bodywork part (16).

## Patentansprüche

1. Fahrzeugtür (10), die eine Heckklappe bildet, **dadurch gekennzeichnet, dass** sie eine Fensterscheibe (12) und ein Tragelement (14), das in der Verlängerung der Fensterscheibe angeordnet ist, aufweist, wobei das Tragelement (14) Folgendes aufweist:
- Mittel (30A, 30B) zum Befestigen der Tür an einer Rohkarosserie des Fahrzeugs und
- Mittel (32) zum Befestigen der Fensterscheibe (12) an dem Tragelement (14), wobei die Befestigungsmittel (32) der Fensterscheibe auf dem Niveau eines unteren Endrands des Tragelements (14) liegen und mit einem oberen Endrand der Fensterscheibe (12) zusammenwirken; wobei das Tragelement (14) ein Teil (15) aufweist, das die Mittel (30A, 30B) zum Befestigen der Tür an der Rohkarosserie des Fahrzeugs trägt, wobei das Teil (15) auf dem Niveau eines unteren Endrands die Mittel (32) zum Befestigen der Fensterscheibe (12) aufweist, wobei das Teil (15) keine anderen Befestigungsmittel zum Anbauen der Fensterscheibe aufweist.

2. Tür (10) nach Anspruch 1, bei der die Befestigungsmittel der Fensterscheibe mindestens drei Befestigungsstellen (32) aufweisen, vorzugsweise mindestens fünf Befestigungsstellen, und insbesondere über die Breite der Tür verteilt sind.

3. Tür (10) nach Anspruch 1 oder 2, bei der die Fensterscheibe (12) und das Tragelement (14) durch Schrauben, Nieten, Einrasten oder Kleben verbunden sind.

4. Tür (10) nach einem der vorhergehenden Ansprüche, bei der die Befestigungsmittel der Tür an der Karosserie mindestens einen beweglichen Teil (30A, 30B) eines Scharniers aufweisen.

5. Tür (10) nach einem der vorhergehenden Ansprüche, bei der das Tragelement (14) mit einem Karosserieteil (16) abgedeckt ist und Mittel (38) zum Befestigen dieses Teils (16) aufweist, die vorzugsweise an dem Rand des Tragelements (14) verteilt sind.

6. Tür (10) nach einem der vorhergehenden Ansprüche, bei der das Tragelement mindestens eines der Organe der folgenden Liste aufweist:
- mindestens ein Ausgleichergelenk (37A, 37B) zum unterstützten Öffnen der Tür,
- eine Leuchte,
- eine Beleuchtung für die Fahrgastzelle des Fahrzeugs,
- mindestens ein elektrisches Kabel,
- eine Antenne,
- ein Element zum Anschließen eines Entfrostungssystems,
- eine Schalldichtung,
- ein Antriebssystem für das unterstützte Öffnen der Tür,
- mindestens ein Bezugselement für die Montage der Tür auf die Rohkarosserie.

7. Tür (10) nach einem der vorhergehenden Ansprüche, bei der das Tragelement (14) zumindest teilweise hergestellt ist aus Kunststoff, insbesondere mit Faserverstärkung, wie zum Beispiel aus einer Formzusammensetzung, zum Beispiel SMC (Sheet Moulding Compound), AMC (Advanced Moulding Compound) oder BMC (Bulk Moulding Compound), oder zum Beispiel einem verstärkten Thermoplastmaterial, zum Beispiel mit langen Glasfasern verstärktes Polypropylen (PPLGF).

8. Fahrzeug, das eine Tür (10) nach einem der vorhergehenden Ansprüche aufweist.

9. Verfahren zum Herstellen einer Fahrzeugtür (10) nach Anspruch 1, **dadurch gekennzeichnet, dass** es die folgenden Schritte in einer beliebigen Reihenfolge aufweist:
- Befestigen eines oberen Endrands einer Fensterscheibe (12) der Tür auf dem Niveau eines unteren Endrands eines Teils (15) der Tür,
- Montieren an dem Teil (15), der Befestigungsmittel zum Anbauen der Tür auf einer Fahrzeugkarosserie, die insbesondere einen beweglichen Teil (30A, 30B) mindestens eines Scharniers und eventuell andere Elemente, wie zum Beispiel ein Karosserieteil (16) aufweist.
